# FASCICULE DE BREVET EUROPEEN

(11) **EP 3 638 829 B1**
(45) Date de publication et mention de la délivrance du brevet: **03.03.2021**
(21) Numéro de dépôt: 18748972.9
(22) Date de dépôt: 14.06.2018
(51) Int. Cl.: C25C 3/12, F27B 13/14, F27D 19/00, F27D 21/00

(54) **PROCÉDÉ DE TRACABILITÉ DE BLOCS CARBONES**
VERFAHREN ZUR VERFOLGBARKEIT VON KOHLENSTOFFHALTIGEN BLÖCKEN
CARBONACEOUS BLOCK TRACEABILITY METHOD

(30) Priorité: 15.06.2017 FR 1755400
(43) Date de publication de la demande: 22.04.2020
(73) Titulaire: Fives Solios, 78230 Le Pecq (FR)
(72) Inventeur: MAHIEU, Pierre, 69702 Givors Cedex (FR); COULAUD, Christian, 69700 Givors (FR); GENIN, Xavier, 69700 Givors (FR)
(74) Mandataire: Plasseraud IP
(86) Numéro de dépôt international: PCT/FR2018/051403
(87) Numéro de publication internationale: WO 2018/229441

(56) Documents cités:
- EP-A1- 2 738 710
- WO-A1-2006/004427
- US-A1- 2009 136 122

## Description

### CONTEXTE

L'invention concerne le domaine de la production de blocs carbonés destinés à l'électrométallurgie, et plus particulièrement le domaine de la fabrication d'anodes et de cathodes en carbone destinées à la production par électrolyse de l'aluminium. L'invention se rapporte plus précisément à un procédé de traçage desdits blocs carbonés dans le processus global depuis la fabrication des blocs jusqu'à leur scellement sur des tiges électrolyse. Dans ce qui suit, nous parlerons principalement des anodes, étant entendu qu'il pourra s'agir de cathodes, ou de tout autre type d'électrodes.

L'électrolyse de l'aluminium par le procédé Hall-Héroult requiert la fabrication préalable d'anodes en carbone. A cet effet, typiquement, les anodes sont fabriquées dans un atelier de production à partir notamment de brai liquide et de coke concassé, mélangés et malaxés pour former une pâte homogène. Cette pâte est ensuite compactée afin d'obtenir des blocs aux dimensions et propriétés standards, appelés anodes crues. Les anodes crues subissent ensuite un traitement thermique jusqu'à 1100°C dans un four de cuisson afin d'augmenter leur résistance mécanique, d'abaisser leur réactivité chimique et leur résistivité.

Les anodes crues sont transférées à l'atelier de cuisson par des convoyeurs. Elles sont associées par paquets de plusieurs anodes. Un système de manutention collecte chaque paquet et le positionne dans une alvéole du four. A la fin du traitement thermique, chaque paquet est extrait de l'alvéole par le système de manutention et est positionné sur un convoyeur. Les anodes cuites de chaque paquet sont dissociées les unes des autres et sont transférées par un ensemble de convoyeurs vers un atelier de scellement afin d'être assemblées à des tiges d'électrolyse.

Il est connu que les propriétés physico-chimiques d'une anode, issues principalement des paramètres de production et de cuisson de l'anode, ont un impact important sur la productivité globale du procédé d'électrolyse. La traçabilité de l'anode au cours des procédés de fabrication et de cuisson est donc un enjeu important pour les alumineries.

### INCONVENIENTS DE L'ART ANTERIEUR

Du fait des contraintes thermiques et du nombre important d'anodes requises dans le cycle de production, les solutions existantes d'identification des anodes utilisent exclusivement des systèmes de codage par empreinte mécanique. Le principe revient à apposer à la surface de chaque anode un numéro ou un code matriciel par utilisation d'un outil qui réalise une empreinte par déformation de la matière. Par exemple, le document WO2006/004427 décrit des systèmes de marquage par empreinte ou autres procédés de déformation de la surface d'une électrode associés à des systèmes de décodage de ces marques par scanner utilisant une source électromagnétique ou ultrasonore.

Ces solutions ne sont pas pleinement satisfaisantes, notamment en raison :
- de la faible fiabilité de reconnaissance des empreintes, du fait notamment d'un faible taux de reconnaissance, notamment après la cuisson de l'anode en raison de la déformation de l'empreinte, du dépôt de poussière de coke servant au garnissage dans le four, ou d'une combustion partielle de l'anode lors de la cuisson ;
- du coût important d'implantation et de maintenance des systèmes de marquage par empreinte mécanique ;
- de la complexité des systèmes de codage et de décodage utilisant la technologie du scanner ;
- des limites de combinaisons disponibles d'un marquage traditionnel qui ne permet pas de suivre toutes les anodes, ce qui conduit à attribuer un même identifiant à un lot d'anodes, et donc à perdre en fiabilité ;
- de l'encombrement au sol des systèmes de marquage par empreinte mécanique.

### OBJET DE L'INVENTION

Il existe donc un besoin pour en particulier remédier aux inconvénients de l'art antérieur.

A cet effet, un premier objet de l'invention est de proposer une solution de traçabilité des anodes, et plus généralement des blocs carbonés, tout au long de leur utilisation avec une fiabilité accrue.

Un deuxième objet de l'invention est de proposer une solution de traçabilité des blocs carbonés à moindre coût.

Un troisième objet de l'invention est de proposer une solution de traçabilité des blocs carbonés engendrant un encombrement minimal.

Un quatrième objet de l'invention est de proposer une solution de traçabilité des blocs carbonés aisément mis en œuvre en tout point du circuit du bloc carboné.

Un cinquième objet de l'invention est de proposer une solution de traçabilité des blocs carbonés permettant le suivi des blocs avant et après un traitement thermique.

Ainsi, selon un premier aspect, l'invention propose un procédé de traçabilité de blocs carbonés selon la revendication 1, depuis la fabrication des blocs jusqu'à leur scellement sur des tiges d'électrolyse, convenant pour le suivi des blocs avant et après traitement thermique, mis en œuvre dans une installation de production de blocs carbonés qui comprend notamment :
- au moins une station d'identification dite initiale d'au moins un bloc carboné, la station d'identification initiale comprenant un dispositif de prise de vue dit initial d'au moins une partie de la surface extérieure du bloc carboné ;
- un générateur de signature permettant de détecter, sur au moins une prise de vue par le dispositif de prise de vue initial, au moins une caractéristique visuelle intrinsèque, de manière à générer et à enregistrer au moins une signature numérique pour le bloc carboné à partir de ladite caractéristique visuelle intrinsèque ;
- au moins une station d'identification dite de suivi du bloc carboné, la station d'identification de suivi comprenant un dispositif de prise de vue dit de suivi d'au moins une partie de la surface extérieure du bloc carboné ;
- au moins un détecteur permettant de détecter, sur au moins une prise de vue par le dispositif de prise de vue de suivi, au moins en partie ladite caractéristique visuelle intrinsèque, et de reconnaître la signature numérique du bloc carboné pour identifier le bloc carboné.

La définition d'une signature numérique propre à chaque bloc carboné à partir de caractéristiques d'éléments visibles à la surface des blocs permet d'identifier les blocs directement sans qu'il soit nécessaire d'utiliser des moyens de marquage spécialement dédiés à la génération d'une signature, selon l'état de la technique. Le système est particulièrement adapté à la traçabilité des électrodes, et plus précisément encore des anodes, pour la production d'aluminium par électrolyse, mais peut également être utilisé pour toute électrode présentant des spécificités physiques similaires. Le système de traçabilité est ainsi notamment plus simple et moins encombrant. Par ailleurs, en se basant sur une ou plusieurs caractéristiques visuelles intrinsèques, par nature aléatoires car difficilement modifiables de manière volontaire par une action humaine extérieure, le système de traçabilité est plus fiable qu'un système employant un marquage mécanique, les marques étant par nature limitées en nombre.

La ou les caractéristiques visuelles intrinsèques à la surface du bloc carboné peuvent comprendre notamment :
- une forme géométrique particulière inscrite dans la texture du bloc.
- la localisation et/ou la morphologie intrinsèque de grains ;
- un ou plusieurs défauts de reliefs dans une matrice liante entourant des grains ;
- au moins en partie des empreintes de bouchons utilisés lors de la mise en forme du bloc carboné pour la formation de cavités destinées à recevoir des tiges d'électrolyse
- une forme géométrique singulière à la surface du bloc carboné.

Ces caractéristiques visuelles intrinsèques sont immédiatement disponibles sur la surface la extérieure des blocs par un système de vision, de sorte qu'aucun dispositif supplémentaire donnant accès aux caractéristiques visuelles intrinsèques n'est requis.

Selon un mode de réalisation, les dispositifs de prise de vue comprennent un lecteur optique et un dispositif d'enregistrement d'au moins une image brute produite par ledit lecteur optique. Dans ce cas, le système de traçabilité peut comprendre un dispositif de traitement numérique de l'au moins une image brute qui permet de générer une image optimisée dans laquelle est mise en exergue la au moins une caractéristique visuelle intrinsèque de la surface du bloc carboné.

Selon l'invention le système est dépourvu de dispositif de marquage spécialement dédié à la génération d'une signature numérique du bloc carboné.

Selon un mode de réalisation, la station d'identification initiale est confondue avec la station d'identification de suivi, limitant le nombre de stations d'identification requis.

Selon un mode de réalisation, le système de traçabilité comprend une pluralité de stations d'identification de suivi, disposées en aval de la station d'identification initiale selon le sens de circulation des blocs, chaque station étant disposée en amont ou en aval d'une zone de stockage et/ou de traitement et/ou de transport, de manière à assurer le suivi des blocs à chaque étape de leur circuit.

Selon un mode de réalisation, le système de traçabilité comprend un dispositif de suivi de la position permettant de connaître et d'enregistrer la position du bloc carboné entre deux stations d'identification, afin de compléter la reconnaissance par la ou les caractéristiques visuelles intrinsèques.

Selon un mode de réalisation, le système comprend un dispositif d'horodatage des positions du bloc carboné.

Selon un mode de réalisation, le système de traçabilité comprend des moyens de convoyage et de manutention des blocs carbonés pour leur assemblage en paquets de blocs carbonés en vue de leur traitement thermique dans un four de cuisson et des moyens de désassemblage des paquets après leur traitement thermique, le dispositif de suivi de la position étant apte à connaître la position de chaque bloc carboné dans les paquets et la position des paquets dans le four.

Selon un mode de réalisation, le système est particulièrement adapté pour la traçabilité d'un bloc carboné destiné à la production d'aluminium par électrolyse.

Selon un mode de réalisation, au moins une zone de traitement et/ou de stockage et/ou de transport comprend un four de cuisson des blocs carbonés. La station d'identification initiale est placée en amont, selon le sens de circulation des blocs dans l'installation, du four de cuisson de manière à définir la signature numérique sur un bloc carboné cru. Au moins une station d'identification de suivi est alors placée en aval du four de manière à reconnaître la signature numérique sur le bloc carboné cuit.

Le système de traçabilité reposant sur une ou plusieurs caractéristiques visuelles intrinsèques est en effet moins sensible aux modifications lors du passage à la cuisson des blocs carbonés, augmentant la fiabilité de la traçabilité.

Le procédé comprend notamment :
- au moins une prise de vue initiale d'au moins une partie de la surface extérieure d'au moins un bloc carboné par la station d'identification initiale ;
- détection sur la prise de vue initiale d'au moins une caractéristique visuelle intrinsèque,
- génération et enregistrement d'au moins une signature numérique pour le bloc carboné à partir de ladite caractéristique visuelle intrinsèque ;
- reconnaissance de la signature numérique dans au moins une station d'identification de suivi.

Selon un mode de réalisation, le procédé peut comprendre par ailleurs :
- transport du bloc carboné à une station d'identification de suivi ;
- au moins une prise de vue de suivi d'au moins une partie de la surface extérieure du bloc carboné par une station d'identification de suivi ;
- détection sur la prise de vue de suivi de la au moins une caractéristique visuelle intrinsèque,
- reconnaissance de la signature numérique du bloc carboné.

Selon un mode de réalisation, l'étape de reconnaissance comprend une comparaison entre la caractéristique visuelle intrinsèque de la prise de la vue initiale et la caractéristique visuelle intrinsèque de la prise de vue de suivi et une détermination d'un taux de ressemblance entre la caractéristique visuelle intrinsèque des deux prises de vue.

Selon un mode de réalisation, le procédé comprend :
- l'enregistrement de la position du bloc carboné dans au moins une zone de traitement et/ou de stockage et/ou de transport,
- la reconnaissance de la signature numérique comprend alors une mise en relation de la caractéristique visuelle intrinsèque de la prise de vue initiale avec la caractéristique visuelle intrinsèque de la prise de vue de suivi par la connaissance de la position du bloc carboné dans la au moins une zone de traitement et/ou de stockage et/ou de transport.

### DESCRIPTION

D'autres effets et avantages de l'invention apparaîtront à la lumière de la description de modes de réalisation accompagnée des figures dans lesquelles :
- la figure 1 est une vue schématique en trois dimensions d'un bloc carboné, tel qu'une anode ;
- la figure 2 est un exemple d'image optimisée après le traitement numérique d'une image brute d'une région à la surface d'une anode, selon un exemple de réalisation de l'invention ;
- la figure 3 est une vue schématique prise de dessus d'une anode, montrant la position des bouchons ; et,
- la figure 4 est une représentation schématique d'un exemple de traçabilité d'une anode dans une installation de production d'anodes selon un exemple de réalisation de l'invention.

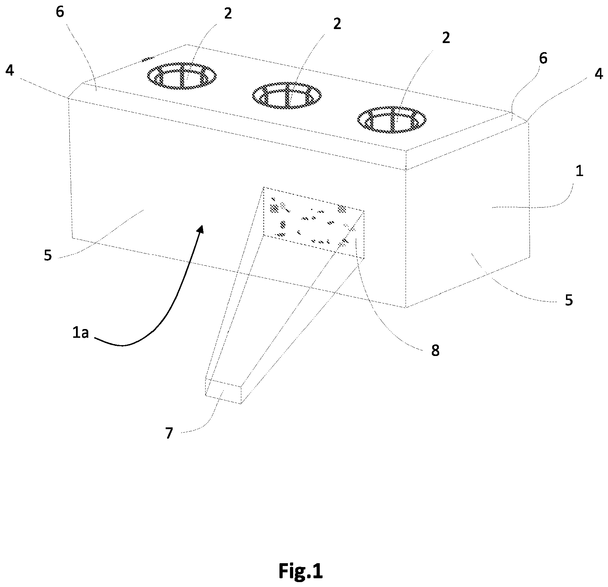

Sur la figure 1, il est représenté un bloc 1 carboné, qui est en particulier destiné à être une anode pour la fabrication d'aluminium par électrolyse. Il est entendu que le bloc carboné peut également être une cathode ou toute électrode destinée à l'électrométallurgie par exemple du titane, du silicium ou de l'acier.

Dans ce qui suit, on fera référence à l'exemple selon lequel le bloc 1 carboné est une anode, étant entendu que l'invention trouve une application pour tout type d'électrodes. L'anode 1 comprend une surface **1a** extérieure, qui est accessible visuellement par un système de vision, des cavités **2,** en l'occurrence trois cavités 2, destinées à recevoir les trois plots à la base d'une tige d'électrolyse. L'anode comprend également des coins **4** forment la liaison entre les plans droits **5** des faces et les plans inclinés **6** situées sur le bord du haut de la surface la extérieure de l'anode 1.

Selon une particularité de l'invention, la traçabilité des anodes 1 est réalisée en caractérisant chaque anode à partir d'une caractéristique visuelle intrinsèque de chaque anode.

Par « caractéristique visuelle intrinsèque » de l'anode, on désigne ici toute caractéristique visible à la surface extérieure de l'anode, pouvant être détectée par un système de vision, et spécifique à l'anode elle-même dans le cadre de son utilisation et de sa fabrication. Ainsi, une caractéristique visuelle intrinsèque fait intervenir des spécificités de l'anode 1 qui dépendent exclusivement de son procédé de fabrication et de mise en forme et/ou des contraintes d'utilisation de l'anode, indépendamment de tout système extérieur ou ajouté dans le but spécifique de caractériser l'anode.

Notamment, par « caractéristique visuelle intrinsèque », on désigne ici des caractéristiques relatives aux coins 4, aux cavités 2, à la texture de la surface la extérieure de l'anode 1 avec par exemple, la position, la taille et/ou la morphologie intrinsèque de grains **9a** visibles à la surface de l'anode, ou encore des défauts de reliefs dans la matrice **9b** liante entourant les grains, et plus généralement toute forme géométrique particulière inscrite dans la texture, sur au moins une partie de la surface extérieure de l'anode 1.

En effet, l'anode 1 est formée par un mélange notamment de coke et de fractions d'anodes cuites recyclées qui se présente sous forme de grains **9a** de plusieurs fractions granulométriques, et d'un liant comprenant du brai, qui est une pâte, qui forme la matrice **9b** liante. La répartition des grains 9a à la surface la extérieure de l'anode est aléatoire et statistiquement non répétable d'une anode à l'autre. Avec les systèmes de traitement d'image actuels on peut identifier la disposition et/ou les caractéristiques géométriques d'un grain à la surface de l'anode (hauteur, largeur, surface, périmètre). Le grain le plus significatif, ou un défaut de relief ou un coin 4 ou une cavité 2, puis plus tard le bouchon dans une cavité 2 peuvent être utilisés comme origine du système de coordonnées. Ainsi, la texture de la surface la extérieure de l'anode 1 présente des formes géométriques particulières, dues par exemple à l'arrangement aléatoire des grains **9a** enrobés dans la matrice 9b liante, qui peuvent être utilisées en tant que caractéristique visuelle intrinsèque de l'anode 1. Plus précisément, la position, la taille et/ou la morphologie des grains peuvent constituer une caractéristique visuelle intrinsèque.

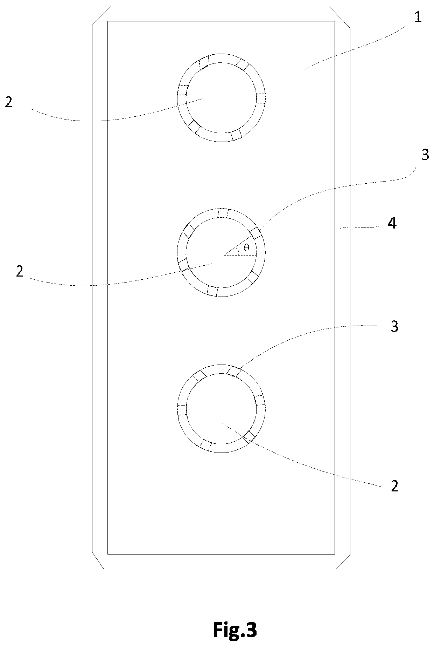

En outre, les cavités 2 sont formées lors de l'étape de compaction. Plus précisément, lors de cette étape, la pâte destinée à former l'anode est déversée dans un moule monté sur une table vibrante. En général, un dispositif de contrepression assure, avec les vibrations, la compaction de la pâte dans le moule. Typiquement, des bouchons, présentant des filets, destinés à former les cavités 2, sont montés flottants en rotation, soit sur le moule soit sur le dispositif de contrepression, de sorte que leur orientation angulaire est aléatoire. Ainsi, les cavités 2 présentent des empreintes **3** de filets, représentées sur la figure 3, dont l'orientation angulaire est également aléatoire, propre à chaque anode 1. Des coins 4 forment la liaison entre les plans droits 5 des faces des anodes et les plans inclinés 6 situées sur le bord du haut des anodes. Un lecteur optique 7 assure une prise de vue d'une surface 8 de l'anode.

La surface la extérieure de l'anode 1 peut présenter des formes géométriques singulières, c'est-à-dire formant des singularités sur la surface de l'anode, et notamment des défauts de reliefs se formant lors de la mise en forme de l'anode 1 et/ou lors de sa manutention et/ou lors de tout traitement, par exemple des creux dans la matrice 9b liante entourant les grains et des fissures. Par exemple, les coins 4 de l'anode peuvent être particulièrement sensibles à la formation de telles singularités. Ces formes géométriques singulières peuvent alors être utilisées en tant que caractéristique visuelle intrinsèque.

Ainsi, en d'autres termes, une caractéristique visuelle intrinsèque est une caractéristique présente sur l'anode exclusivement de par son procédé de fabrication usuel, résultante exclusivement des paramètres de fabrication, sans implication d'une étape et/ou d'un dispositif propre à l'application d'une marque pour le suivi.

On va maintenant décrire un exemple d'un circuit d'une anode 1 au sein d'une installation de production d'anodes. Les anodes sont déplacées au sein de l'installation au moyen d'un système de transport comprenant par exemple des convoyeurs au sol et/ou aérien ainsi que des systèmes de manutention tels que des ponts, que ce soit des ponts de manutention ou des ponts de stockage.

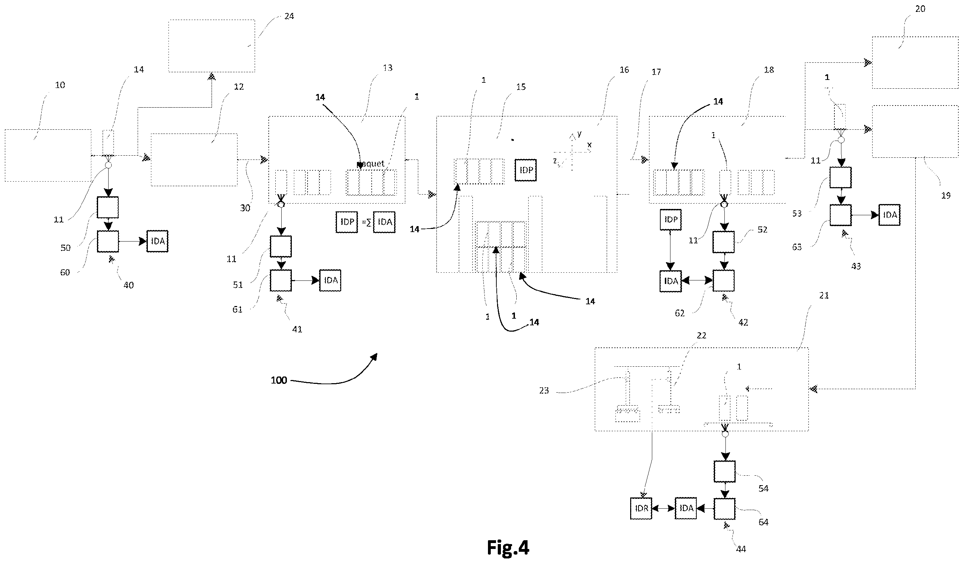

Comme présenté ci-dessus, et comme cela est représenté sur la figure 4, l'installation **100** de production des anodes comprend un atelier **10** de production des anodes. Typiquement, les anodes sont produites à partir notamment de brai liquide et de coke concassé et/ou de morceaux d'anodes recyclées, mélangés et malaxés pour former une pâte homogène. Cette pâte est ensuite compactée dans un moule afin d'obtenir des blocs aux dimensions et propriétés standards appelés anodes crues.

L'installation 100 peut comprendre, en aval de l'atelier 10 de production, un poste de rejet **24** vers lequel les anodes jugées non conformes sont aiguillées. Les anodes jugées conformes sont stockées dans une zone **12** de stockage de pré-cuisson.

Le système de transport comprend par exemple un convoyeur **30** permettant le transfert des anodes crues conformes de la zone **12** de stockage de pré-cuisson à un poste **13** d'assemblage en paquet **14,** en amont d'un four 16 de cuisson. Un pont mobile **15,** équipé d'une pince, assure la prise en charge des paquets **14** d'anodes, leur mise en place dans le four de cuisson **16,** puis leur reprise et dépose sur un convoyeur **17** de sortie.

Dans ce qui suit, les termes amont et aval devront être compris en référence au sens normal de défilement des anodes dans le circuit de l'installation 100, de l'amont vers l'aval.

Les anodes crues subissent ensuite un traitement thermique dans le four **16** de cuisson, typiquement un four ouvert à feux tournants. Ce four est composé d'alvéoles dans lesquelles sont positionnées les anodes crues par couches. De part et d'autre de chaque alvéole, une cloison réfractaire creuse permet le passage de gaz chauds qui assure la cuisson des anodes par conduction thermique à travers les parois réfractaires.

En aval du four 16, l'installation 100 comprend un poste **18** de désassemblage, sur lequel les anodes sont amenées par le convoyeur 17 et dissociées les unes des autres.

En aval du poste 18 de désassemblage, l'installation 100 comprend une zone de stockage **19** post cuisson où les anodes jugées conformes à la qualité requise sont stockées, et une zone **20** de rejet d'anode cuite pour les anodes jugées non conformes.

Enfin, l'installation 100 peut comprendre, en aval du poste de stockage 19, un atelier de scellement **21** assembler les anodes avec des tiges d'électrolyse **22,** en vue de leur utilisation dans une cuve d'électrolyse.

De manière générale, l'installation 100 peut ne pas être limitée aux éléments décrits ci-dessus, et peut comprendre toute zone de traitement qui peut être désiré, comme un poste de brossage, de rainurage et/ou de mesure entre le four 16 de cuisson et l'atelier de scellement 21.

La détection d'une ou plusieurs caractéristiques visuelles intrinsèques de l'anode permet alors de générer pour chaque anode, une signature numérique qui lui est propre, et ainsi identifier chaque anode directement, sans qu'il soit nécessaire d'utiliser des dispositifs de marquage spécialement dédiés à cet effet selon l'état de la technique, tout le long de son circuit au sein de l'installation de production.

Par signature numérique, on désigne ici un ensemble d'informations traduisant numériquement une ou plusieurs caractéristiques visuelles intrinsèques.

A cet effet, l'installation de production comprend un système de traçabilité des anodes, assurant leur suivi pendant toutes les étapes du circuit, c'est-à-dire pendant leur production, leur traitement, leur transport et leur stockage.

Plus précisément, le système de traçabilité comprend :
- au moins une station 40 d'identification dite initiale, la station d'identification initiale comprenant un dispositif de prise de vue dit initial d'au moins une partie de la surface la extérieure de chaque 1 ;
- un générateur de signature permettant de détecter, sur au moins une prise de vue par le dispositif de prise de vue initial, au moins une caractéristique 9, 3 visuelle intrinsèque, de manière à générer et à enregistrer au moins une signature numérique pour l'anode 1 à partir de ladite caractéristique visuelle intrinsèque ;
- au moins une station 41, 42, 43, 44 d'identification dite de suivi, la station d'identification de suivi comprenant un dispositif de prise de vue dit de suivi d'au moins une partie de la surface la extérieure de chaque anode 1 ;
- au moins un détecteur permettant de détecter, sur au moins une prise de vue par le dispositif de prise de vue de suivi, au moins en partie ladite caractéristique visuelle intrinsèque, et de reconnaître la signature numérique de l'anode pour identifier l'anode.

Ainsi, en plaçant la station 40 d'identification initial en amont d'une zone de traitement, c'est-à-dire notamment du four 16, et/ou d'une zone 12, 19 de stockage, et/ou d'une zone de transport de l'anode 1 et la station 41, 42, 43, 44 d'identification de suivi en aval, et de préférence directement en aval, le système de traçabilité permet d'assurer le suivi de l'anode 1 lors de tout déplacement.

Il va maintenant être décrit un mode de réalisation du système de traçabilité dans lequel la caractéristique visuelle intrinsèque considérée est la position des grains sur la texture pour une portion de la surface extérieure de chaque anode 1.

Ainsi, le dispositif de prise de vue de chaque station d'identification comprend un ou plusieurs lecteurs optiques, par exemple une caméra numérique, qui permet de prendre des images brutes de la surface la extérieure de chaque anode 1. Un système permet d'enclencher automatiquement la prise de vue, en détectant lorsque l'anode est en position. Par exemple, chaque image brute peut correspondre à une portion de la surface la extérieure de l'anode comprenant au moins une caractéristique visuelle intrinsèque. Les images brutes sont alors enregistrées dans un dispositif d'enregistrement. Le système de traçabilité est par ailleurs équipé d'un dispositif de traitement numérique des images brutes pour les convertir en images optimisées et les enregistre dans une base de données. Par exemple, le dispositif de traitement est compris au sein d'un système informatique centralisé à tout ou partie des stations d'identification. Le système de traçabilité comprend alors un dispositif de transfert des images brutes saisies par les lecteurs optiques au système informatique centralisé.

En variante, le dispositif de traitement numérique des images brutes prises par les lecteurs optiques des stations d'identification en images optimisées est compris directement dans toutes les ou partie des stations d'identification.

Les lecteurs optiques sont, par exemple, disposés sur des portiques par exemple posés au sol, lesquels embarquent un éclairage puissant afin d'éclairer au mieux les surfaces la extérieures des anodes 1. Des sources lumineuses émettant une lumière permettant de distinguer le contour des grains par rapport au brai servant de liant peuvent être utilisées, telles qu'une lumière blanche en incidence rasante. Un système d'air soufflé permet de ventiler la lentille des lecteurs optiques pour la rafraîchir et la protéger de la poussière.

Il peut être nécessaire d'utiliser plusieurs lecteurs optiques, notamment là où les anodes peuvent être positionnées en quinconce sur des convoyeurs, afin de pouvoir prendre des images de la ou des portions de surface la extérieure de l'anode déterminées.

Sur l'image optimisée, le grain le plus significatif, par exemple par sa taille ou son degré de définition sur l'image, ou un coin ou les bouchons peuvent être utilisés comme origine d'un système de coordonnées permettant de repérer les positions d'autres grains. En combinant, par exemple, les positions et les propriétés géométriques de plusieurs grains de coke à la surface de l'anode, on peut identifier chaque anode et lui attribuer une signature numérique propre. Par exemple, dans ce cas, la signature numérique est un ensemble d'informations à propos des propriétés géométriques des grains et de leur position. Cette signature permet d'identifier l'anode directement sans moyens de marquage. Selon le paramétrage, une ou plusieurs régions d'observation à la surface extérieure de l'anode sont sélectionnées afin de générer une signature numérique à partir d'une image plus ou moins riche en informations. Par exemple, la signature numérique peut correspondre à la reconnaissance sur l'image brute des pixels caractérisant les contours des grains, et/ou leur position.

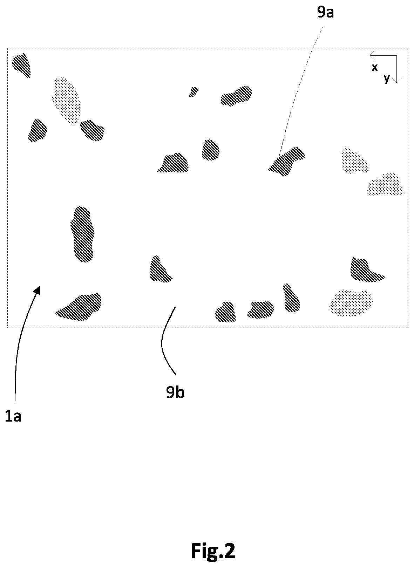

En se reportant à la figure 2 des dessins annexés, on peut voir schématiquement représentée l'image optimisée par traitement numérique de l'image brute d'une portion **8** de la surface la extérieure de l'anode 1 prise par un lecteur optique 7. Le traitement numérique de l'image brute permet de ne conserver que les grains les plus significatifs, c'est-à-dire les grains les plus facilement détectables sur l'image brute. On y voit des grains 9 dont la taille, la morphologie et la position sur l'image sont spécifiques à cette anode. Un logiciel effectue un traitement numérique des images. Par exemple, ce traitement consiste à préciser des données numériques représentatives des grains, par exemple sous la forme d'un tableau comme ci-dessous :

| N° de grain | X | Y | H | W | S |
|---|---|---|---|---|---|
| 1 | 2454 | 23 | 1.222 | 0.867 | 0.765 |
| 2 | 2121 | 234 | 2.607 | 1.431 | 2.872 |

Les données relevées sont dans cet exemple :
- X : la coordonnée du centre du grain selon une direction longitudinale (indiquée sur la figure 2),
- Y : la coordonnée du centre du grain selon une direction transversale,
- H : la hauteur du grain selon la direction transversale,
- W : la largeur du grain selon la direction longitudinale,
- S : la surface du grain.

D'autres données peuvent être prises en compte, comme le périmètre des grains.

Dans cet exemple illustratif, seuls deux grains sont considérés, mais, bien évidemment, le système peut en traiter un grand nombre.

Bien entendu, l'invention permet également, en variante ou en combinaison, de caractériser chaque anode par l'identification et la reconnaissance de points de repère liés à la géométrie standard de l'anode, tels que coins, empreintes de bouchons, etc. Ainsi, la position radiale des filets des empreintes de bouchons, qui varie de manière aléatoire lors du positionnement du moule d'empreinte de bouchon lors du formage des anodes, peut avantageusement être utilisée. En se reportant à la figure 3 des dessins annexés, on peut voir schématiquement représentée une anode 1 en vue de dessus avec trois cavités 2 destinées à recevoir les trois plots d'une tige d'électrolyse. Des bouchons sont utilisés lors de la formation des anodes pour obtenir ces cavités. Ces bouchons laissent des empreintes sur l'anode sur lesquelles on distingue particulièrement des empreintes de filets 3 dont l'orientation angulaire est aléatoire. Dans cet exemple, chaque bouchon laisse six empreintes de filets 3 radialement réparties. Selon l'une des modalités de l'invention, les positions angulaires de ces empreintes sont utilisées par le système de traçabilité pour établir la signature numérique de l'anode.

Selon un mode de réalisation, en variante ou en combinaison, la caractéristique visuelle intrinsèque la position des creux sur la surface la extérieure de l'anode. A cet effet, par exemple, une face de l'anode 1 est éclairée à l'aide d'une lumière rasante, et une image d'au moins une partie de cette face est prise. Les zones sombres, correspondant aux creux, sont alors identifiées et repérées sur l'image, afin de caractériser l'anode et générer une signature numérique.

Avantageusement, la signature numérique d'une anode est associée à un identifiant, par exemple un numéro, noté IDA dans la suite, un IDA étant unique et propre à une anode.

Selon une variante de réalisation de l'invention, plusieurs signatures sont attribuées à une même anode, chacune étant définie à partir de caractéristiques visuelle intrinsèque visible à la surface extérieure de l'anode. Ainsi, une anode peut avoir une première signature définie à partir de l'un de ses coins, une seconde signature définie à partir d'une empreinte de bouchon, une troisième signature définie à partir de l'analyse des grains d'une première région d'observation et une quatrième signature définie à partir de l'analyse des grains d'une seconde région d'observation. Une même signature peut également être définie à partir de plusieurs caractéristiques visuelles intrinsèques. De préférence, dans ce cas, les signatures numériques d'une même anode sont associées à l'aide d'un IDA.

En d'autres termes, la quantité d'informations dans un ensemble d'information, utilisées pour générer une signature numérique, ainsi que le nombre de signatures, peut varier en fonction des besoins et notamment du niveau de fiabilité requis : plus le nombre de caractéristiques visuelles intrinsèques retenues sera élevé, plus la fiabilité de la signature sera accrue ; plus le nombre de signatures utilisées pour une anode sera élevé, plus la fiabilité de la reconnaissance sera accrue.

Ainsi, à partir d'une ou de plusieurs caractéristiques visuelles intrinsèques, la station 40 d'identification initiale génère une ou plusieurs signatures numériques pour chaque anode 1. Les signatures numériques sont enregistrées pour chaque anode par exemple dans une base de données du système informatique centralisé.

Lorsqu'une anode 1 passe dans une station 41 ; 42 ; 43 ; 44 d'identification de suivi, les lecteurs optiques prennent au moins une image d'une portion de la surface la extérieure de l'anode 1. L'image est optimisée, et traduite numériquement sous forme d'un ensemble d'informations.

Cet ensemble d'informations est comparé avec les signatures numériques enregistrées dans la base de données du système informatique centralisé, afin de reconnaître au moins une signature numérique, et donc reconnaître l'anode 1 qui est passée dans la station 41 ; 42 ; 43 ; 44 d'identification de suivi.

Plus précisément, selon un mode de réalisation, l'ensemble d'information obtenu à partir de l'image prise par la station d'identification de suivi est utilisé afin de générer une signature numérique secondaire qui est comparée à l'ensemble des signatures générées par la station d'identification initiale et enregistrées dans le système informatique centralisé. Un indice de similarité est alors calculé pour chaque comparaison. Une correspondance entre deux signatures est retenue pour l'indice de similarité le plus élevé.

En variante, l'ensemble d'informations généré à partir de la ou des prises de vue de la station 41 ; 42 ; 43 ; 44 d'identification de suivi peut être utilisé pour générer une nouvelle signature, comme cela sera explicité plus loin.

De préférence, le système de traçabilité comprend une pluralité de stations d'identification de suivi, disposées en amont de chaque zone de traitement et/ou de stockage et/ou de transport.

Par traitement, on entend ici toute opération impliquant une action sur l'anode, telle que la cuisson dans le four 16 précité, une opération de brossage, une opération de rainurage, une opération de fraisage, une opération de carottage, une opération de marquage, une opération de caractérisation, par exemple par mesurage.

De préférence encore, le système de traçabilité comprend une pluralité de stations d'identification de suivi 41, 42, 43, 44, disposées en amont et en aval de chaque zone de traitement et/ou de stockage et/ou de transport.

En particulier, la signature des anodes à partir d'une caractéristique visuelle intrinsèque permet de réduire les risques de perte de la signature lors d'un traitement. En effet, la signature numérique est réalisée à partir d'un ensemble d'informations intrinsèquement présent sur l'anode 1, et dont la quantité est ajustable en fonction de la fiabilité requise, de sorte qu'elle peut facilement être supérieure à celle d'une marque appliquée par un dispositif spécialement dédié à cet effet, comme dans l'état de la technique. Par conséquent, même en cas d'altération de l'anode, la reconnaissance conserve un degré de fiabilité élevé, adapté au suivi des anodes.

De manière optionnelle, en variante, le système de traçabilité peut comprendre un dispositif de suivi de la position des anodes, de manière à connaître et enregistrer des données relatives à la position de chaque anode 1 entre deux stations d'identification de suivi, et plus précisément lors du passage de l'anode 1 dans une zone de traitement et/ou de stockage. Les informations de position du dispositif de suivi sont par exemple enregistrées dans le système informatique centralisé, en lien avec la ou les signatures numériques de l'anode correspondante, afin d'aider à la reconnaissance d'une signature.

En effet, il peut arriver que des caractéristiques visuelles intrinsèques soient altérées lors d'une étape de traitement et que la quantité choisie d'informations dans la signature numérique soit trop faible pour permettre une reconnaissance dans une station de suivi. Cela peut être le cas notamment lors du passage dans le four 16, dans lequel le traitement thermique à haute température peut avoir des incidences sur les caractéristiques visuelles intrinsèques des anodes.

Ainsi, il peut être prévu de manière optionnelle un couplage entre les signatures numériques et les données de position avant et après passage des anodes dans le four 16 de cuisson pour s'affranchir de la déformation ou l'altération potentielle de la ou des caractéristiques visuelles intrinsèques prises en compte pour constituer la signature de l'anode, due notamment au traitement thermique à haute température de l'anode. Ce couplage est réalisé en utilisant les données de positionnement du système de transport de l'installation de production, et notamment des convoyeurs et du pont du four. Plus précisément, selon un mode de réalisation, les anodes, crues, sont assemblées en paquet 14 dans une zone d'assemblage en amont du four 16 de cuisson. Ces paquets 14 sont ensuite introduits dans le four 16. Lorsque les anodes sont cuites, les paquets 14 d'anodes sont extraits du four et les anodes cuites sont désassemblées dans une zone de dégroupage des paquets d'anodes cuites.

Ainsi, l'utilisation des données de position peut être faite, notamment à l'aide d'un dispositif d'horodatage, de la manière suivante :
- au niveau d'une station d'identification, par exemple de suivi dans la zone d'assemblage des paquets d'anodes crues en amont du four de cuisson, au moins une prise de vue d'une portion de la surface extérieure de l'anode est réalisée, afin soit de générer une signature numérique si cela n'a pas déjà été fait plus en amont, soit de reconnaitre la signature numérique correspondante comme cela été expliqué ci-dessus ;
- enregistrement de la position de l'anode crue dans un paquet d'anodes par exemple en associant son IDA à sa position dans le paquet d'anodes ;
- à la fin de la constitution d'un paquet, génération et enregistrement d'un identifiant interne de paquet d'anodes IDP ;
- traçage des paquets d'anodes dans le four par repérage géographique des paquets pendant les convoyages et les opérations de manutention (chargement/déchargement) dans les alvéoles du four 16 de cuisson avec éventuellement horodatage du chargement et du déchargement, c'est-à-dire en associant chaque IDP avec la position correspondante et/ou l'horodatage ;
- au niveau d'une station d'identification de suivi dans la zone de dégroupage des paquets d'anodes cuites en aval du four de cuisson, au moins une prise de vue d'une portion de la surface de l'anode cuite juste après la séparation du paquet d'anodes en sortie du four de cuisson, et détection d'une caractéristique visuelle intrinsèque pour reconnaître la signature numérique. Si la reconnaissance de la signature numérique échoue, par exemple parce que le système ne trouve pas de signature numérique enregistrée dans le système qui corresponde à la nouvelle image optimisée qui vient d'être réalisée par la station d'identification de suivi avec un niveau de fiabilité suffisant, l'utilisation des données de positionnement des machines de manutention pour procéder à l'identification du paquet d'anodes et de l'anode en utilisant l'association entre l'IDP et la position des paquets d'une part, et l'IDA et la position des anodes dans les paquets d'autre part, est appliquée afin d'assurer la traçabilité de l'anode ;
- éventuellement, génération d'une nouvelle signature numérique par exemple par la station d'identification de suivi ou par le système informatique centralisé dans la zone de dégroupage pour l'anode cuite, cette nouvelle signature numérique étant utilisée par la suite par les stations d'identification suivantes.

En variante ou en complément, le dispositif d'horodatage peut être utilisé pour effectuer un tri statistique lors de la reconnaissance de la signature. En effet, en connaissant le moment de passage d'une anode à une station d'identification, on peut statistiquement évaluer à quel moment elle est attendue à une autre station d'identification. Ainsi, par exemple, des IDA sont déjà sélectionnés en fonction du moment de passage attendu pour effectuer la reconnaissance de la signature, diminuant le nombre de comparaison devant être effectuées.

Ainsi, le système de traçabilité équipé du dispositif de suivi de la position des anodes permet de sécuriser la traçabilité des anodes en suivant également leur position.

Comme le système de traçabilité ne fait pas intervenir de dispositif de marquage spécialement dédié à cet effet, une nouvelle signature numérique peut en principe être générée dans chaque station d'identification de suivi, sans que cela n'augmente le nombre d'équipements et donc les coûts.

Plus précisément, le suivi des paquets d'anodes peut être réalisé de la manière suivante.

Selon un mode de réalisation, l'installation de production des anodes comprend une zone de convoyage dans laquelle les paquets sont transférés entre la zone d'assemblage des paquets d'anodes crues et l'endroit de prise de chaque paquet par le pont du four de cuisson. Cette zone de convoyage contient plusieurs paquets d'anodes crues en attente. Il est donc nécessaire de localiser ces paquets en attente de chargement dans les alvéoles du four 16 de cuisson.

Le système de traçabilité est connecté à un système de manutention des paquets dans le four, afin de disposer notamment des informations « paquets pris » et « paquets déposés », et de la localisation du pont en temps réel. Il a, en interne en mémoire, une cartographie comprenant notamment le plan de masse du four et les coordonnées du convoyeur de paquets d'anodes. Lorsque le système de manutention des paquets prend un paquet d'anodes, le système de traçabilité identifie le paquet retiré par le pont par l'association de la position avec l'IDP et notifie ce retrait au système de manutention. Le système de manutention met alors à jour sa cartographie. De même, un paquet retiré de la zone de convoyage puis reposé dans la zone de convoyage, par exemple suite à un problème technique, est notifié au système de manutention afin qu'il actualise sa cartographie.

Par ailleurs, le système de manutention des anodes dans le four est équipé de systèmes de localisation, par exemple des télémètres ou des encodeurs, qui permettent de déterminer précisément la position de chaque paquet dans les trois dimensions (X, Y, Z). Le système de contrôle du système de manutention communique avec le système de traçabilité pour donner en continu la position (X, Y, Z) des paquets. Lorsqu'un paquet d'anodes est déposé dans une alvéole du four, le système de traçabilité est informé par le système de contrôle du système de manutention de la dépose du paquet. Le système de traçabilité utilise ces informations pour localiser le paquet dans l'alvéole, et gérer ainsi une cartographie des anodes dans l'ensemble du four, en mettant en lien la position du paquet dans le four avec l'IDP du paquet. Le système de traçabilité horodate les poses et déposes des paquets d'anodes afin de corréler les signatures numériques d'anodes avec les données de cuisson. Dans l'hypothèse où un paquet retiré du convoyeur est déposé par le système de manutention en dehors des alvéoles (au sol, zone tampons...), le système de traçabilité mémorise la localisation du paquet déposé grâce aux coordonnées du système de manutention. Lors de la reprise du paquet par le système de manutention, le système de traçabilité assure la continuité du suivi de ce paquet d'anodes.

Typiquement, le système de manutention des anodes dans le four est composé d'un pont de levage équipé d'une pince de manutention. La pince de manutention est conçue pour lever un paquet d'anodes entier.

A la fin du traitement thermique, chaque paquet d'anodes cuites est extrait de l'alvéole où il a été placé par le système de manutention et est positionné sur un convoyeur de sortie de four dans la zone de dégroupage. Le système de manutention informe le système de traçabilité de la venue d'un nouveau paquet d'anodes cuites. A partir de l'identifiant (IDP) du paquet d'anodes, le système de traçabilité extrait les identifiants (IDA) des anodes contenues dans le paquet en question. Les anodes cuites du paquet sont dissociées les unes des autres, et identifiées grâce à la liaison entre l'IDA et la position de l'anode dans le paquet. Les anodes cuites sont ensuite transférées l'une après l'autre, par un ensemble de convoyeurs vers l'atelier de stockage des anodes cuites.

Pour renforcer la traçabilité de l'anode, une nouvelle signature numérique de l'anode peut alors être créée par une station d'identification de la zone de dégroupage des paquets d'anodes cuites en aval du four de cuisson. On dispose ainsi d'une signature numérique qui correspond à l'état de l'anode après ses éventuelles déformations géométriques, ou évolutions de son état de surface, dans le four. Cette signature de l'anode cuite ainsi produite sert à toute station d'identification en aval de l'atelier de cuisson pour le repérage et le suivi des anodes jusqu'au scellement sur les tiges d'électrolyse. Après scellement, l'IDA de l'anode peut être associé à un numéro de tige pour le suivi de la traçabilité dans les cuves d'électrolyse.

On va maintenant décrire un exemple de réalisation d'une installation de production d'anodes comprenant un exemple d'un tel système de traçabilité tel qu'illustré sur la figure 4.

Il y est schématiquement représenté le processus de suivi d'une anode 1 selon un exemple de réalisation de l'invention.

Les anodes 1 crues sont formées dans l'atelier 10 de production d'anodes. En sortie de cet atelier 10, une station d'identification 40 initiale permet d'attribuer une signature numérique à chaque anode. Un lecteur optique 11 prend au moins une image brute 50 de l'anode crue, cette image brute 50 est traitée numériquement pour obtenir une image optimisée 60 à partir de laquelle une signature numérique est générée. Un numéro chronologique d'identification IDA de l'anode est associé à la signature numérique. Si plusieurs images brutes 50 de cette anode sont prises par le lecteur optique 11, ou par plusieurs lecteurs optiques 11, puis converties en signatures numériques, le même numéro d'identification IDA est associé à l'ensemble de ces signatures numériques.

Si l'anode crue est jugée conforme à la qualité attendue, elle est convoyée vers la zone de stockage 12 de pré-cuisson. Si l'anode est jugée non conforme, elle est aiguillée vers le poste de rejet 24. Un convoyeur 30 permet le transfert des anodes crues conformes de la zone de stockage 12 de pré-cuisson au poste 13 d'assemblage en paquets. En entrée de ce poste 13, une station d'identification 41 de suivi permet d'identifier les anodes crues avant leur mise en paquet. Un lecteur optique 11 prend au moins une image brute 51 de l'anode crue, cette image brute 51 est traitée numériquement pour obtenir une image optimisée 61. Le système de traçabilité compare cette image 61 aux images optimisées 60 issues de la station d'identification 40 initiale afin de reconnaître la signature numérique. Il associe ensuite le numéro d'identification IDA lié à cette signature numérique à l'anode 1. Dans cet exemple, un paquet 14 est composé de quatre anodes. Un identifiant interne de paquet IDP est déterminé par le système de traçabilité, par exemple à partir des numéros d'identification IDA des anodes qui le constituent. Le pont mobile 15 assure la prise en charge des paquets 14 d'anodes, leur mise en place dans le four de cuisson 16, puis leur reprise et dépose sur un convoyeur 17 de sortie. Le convoyeur 17 amène les paquets 14 d'anodes cuites sur le poste 18 de désassemblage. Dans celui-ci, une station d'identification 42 de suivi permet de reconnaître la signature numérique. Ceci est obtenu de manière analogue à ce qui est réalisé dans la station d'identification 41 de suivi précédente, par le fait qu'un lecteur optique 11 prend au moins une image brute 52 de l'anode cuite, que cette au moins une image brute 52 est traitée numériquement pour obtenir au moins une image optimisée 62, comparée par le système de traçabilité au moins aux images optimisées 61 issues de la station d'identification 41 de suivi précédente et/ou de la station d'identification 40 initiale, et reconnaît la signature numérique qui lui correspond, pour associer ensuite à l'anode le numéro d'identification IDA lié à cette signature numérique correspondante. Si le système ne parvient pas à trouver de signature numérique concordante, par exemple suite à une détérioration de l'anode 1 dans le four 16 ou lors de sa manutention, le système utilise les informations de positionnement et d'horodatage des moyens de manutention et de levage 15 dans le four 16 pour assurer l'identification de l'anode 1.

En sortie du poste 18 de désassemblage, les anodes 1 sont convoyées vers la zone de stockage 19 post cuisson si elles sont conformes à la qualité requise ou vers la zone 20 de rejet d'anode 1 cuite si cette anode cuite est non conforme. Dans cet exemple de réalisation, une station d'identification 43 de suivi est également placée en entrée du stockage 19 de post cuisson pour renforcer le suivi des anodes, le lecteur optique 11 de cette station 43 prenant au moins une image brute 53 de l'anode cuite, et cette image brute 53 est traitée numériquement pour obtenir une image optimisée 63, qui est comparée au moins aux images optimisées 62 issues de la station d'identification 42 pour reconnaître la signature numérique qui lui correspond. Le système de traçabilité identifie ensuite le numéro IDA de l'anode grâce à la signature numérique.

En sortie du poste de stockage 19, les anodes cuites conformes sont convoyées vers l'atelier de scellement 21 pour être assemblées avec des tiges d'électrolyse 22. En entrée de l'atelier de scellement 21, une station d'identification 44 permet d'identifier les anodes cuites avant leur scellement, à nouveau, grâce à un lecteur optique 11 donnant de chaque anode cuite au moins une image brute 54, qui est traitée numériquement pour obtenir au moins une image optimisée 64 comparée au moins aux images optimisées 63 dans la station d'identification 43 précédente, pour reconnaître la signature numérique, liée au numéro d'identification IDA associée à cette anode.

Les tiges d'électrolyse peuvent disposer d'un marquage 23 et d'un numéro d'identification IDR. Le système de traçabilité marie alors ce numéro identification IDR de chaque tige 22 au numéro d'identification IDA de l'anode qui est assemblée à cette tige 22, pour assurer la continuité de la traçabilité des anodes jusqu'aux cuves d'électrolyse, puis des mégots d'anodes en aval des cuves.

Le système de traçabilité peut en outre alimenter une base de données qui permet d'associer l'ensemble des données en lien avec chaque anode produite, typiquement :
- les identifiants des anodes ;
- l'horodatage au passage de chaque à la station d'identification initiale, en sortie de l'atelier de production des anodes crues ;
- les paramètres de l'atelier 10 de production, tel que la composition de l'anode et ses paramètres de formage ;
- les paramètres de cuisson dans le four 16 issus du système de contrôle de cuisson ;
- la position dans le four de cuisson ;
- les données du laboratoire d'analyse de la qualité des anodes ;
- le numéro de la tige d'électrolyse mariée à l'anode.

## Revendications

1. Procédé de traçabilité de blocs (1) carbonés, depuis la fabrication des blocs jusqu'à leur scellement sur des tiges d'électrolyse convenant pour le suivi des blocs avant et après traitement thermique, mis en œuvre dans une installation (100) de production de blocs carbonés comprenant :
- un système de traçabilité de blocs (1) carbonés durant leur traitement, leur transport et/ou leur stockage, avec :
- au moins une station (40) d'identification dite initiale d'au moins un bloc (1) carboné, la station d'identification initiale comprenant un dispositif de prise de vue dit initial d'au moins une partie de la surface (1a) extérieure du bloc (1) carboné ;
- un générateur de signature permettant de détecter, sur au moins une prise de vue par le dispositif de prise de vue initial, au moins une caractéristique visuelle intrinsèque, de manière à générer et à enregistrer au moins une signature numérique pour le bloc (1) carboné à partir de ladite caractéristique visuelle intrinsèque ;
- au moins une station (41, 42, 43, 44) d'identification dite de suivi du bloc (1) carboné, la station (41, 42, 43, 44) d'identification de suivi comprenant un dispositif de prise de vue dit de suivi d'au moins une partie de la surface (1a) extérieure du bloc (1) carboné ;
- au moins un détecteur permettant de détecter, sur au moins une prise de vue par le dispositif de prise de vue de suivi, au moins en partie ladite caractéristique visuelle intrinsèque, et de reconnaître la signature numérique du bloc (1) carboné pour identifier le bloc (1) carboné,
- et, entre deux stations (40, 41, 42, 43, 44) d'identification du système de traçabilité, au moins une zone de traitement et/ou de stockage et/ou de transport des blocs (1) carbonés,
et dans lequel le système est dépourvu de dispositif de marquage spécialement dédié à la génération d'une signature numérique du bloc (1) carboné,
ledit procédé comprenant :
- au moins une prise de vue initiale d'au moins une partie de la surface (1a) extérieure d'au moins un bloc (1) carboné par la station d'identification initiale ;
- détection sur la prise de vue initiale d'au moins une caractéristique visuelle intrinsèque,
- génération et enregistrement d'au moins une signature numérique pour le bloc (1) carboné à partir de ladite caractéristique visuelle intrinsèque ;
- reconnaissance de la signature numérique dans au moins une station (41, 42, 43, 44) d'identification de suivi.

2. Procédé de traçabilité selon la revendication 1, comprenant :
- transport du bloc (1) carboné à une station d'identification de suivi ;
- au moins une prise de vue de suivi d'au moins une partie de la surface extérieure du bloc (1) carboné par une station (41, 42, 43, 44) d'identification de suivi ;
- détection sur la prise de vue de suivi de la au moins une caractéristique visuelle intrinsèque,
- reconnaissance de la signature numérique du bloc (1) carboné.

3. Procédé de traçabilité selon la revendication 1 ou la revendication 2 dans lequel l'étape de reconnaissance comprend une comparaison entre la caractéristique visuelle intrinsèque de la prise de la vue initiale et la caractéristique visuelle intrinsèque de la prise de vue de suivi et une détermination d'un taux de ressemblance entre la caractéristique visuelle intrinsèque des deux prises de vue.

4. Procédé selon la revendication 2 ou la revendication 3, comprenant :
- l'enregistrement de la position du bloc (1) carboné dans au moins une zone de traitement et/ou de stockage et/ou de transport,
- la reconnaissance de la signature numérique comprend alors une mise en relation de la caractéristique visuelle intrinsèque de la prise de vue initiale avec la caractéristique visuelle intrinsèque de la prise de vue de suivi par la connaissance de la position du bloc (1) carboné dans la au moins une zone de traitement et/ou de stockage et/ou de transport.

5. Procédé selon l'une des revendications précédentes, dans lequel la ou les caractéristiques visuelles intrinsèques à la surface du bloc (1) carboné comprennent une forme géométrique particulière inscrite dans la texture du bloc (1) carboné.

6. Procédé selon la revendication 5, dans lequel la ou les caractéristiques visuelles intrinsèques à la surface du bloc (1) carboné comprennent la localisation et/ou la morphologie intrinsèque de grains (9a).

7. Procédé selon la revendication 5 ou la revendication 6, dans lequel la ou les caractéristiques visuelles intrinsèques à la surface du bloc (1) carboné comprennent un ou plusieurs défauts de reliefs dans une matrice (9b) liante entourant des grains (9a).

8. Procédé selon l'une quelconque des revendications précédentes, dans lequel la ou les caractéristiques visuelles intrinsèques à la surface du bloc carboné comprennent au moins en partie des empreintes (3) de bouchons utilisés lors de la mise en forme du bloc (1) carboné pour la formation de cavités (2) destinées à recevoir des tiges (22) d'électrolyse.

9. Procédé selon l'une quelconque des revendications précédentes, dans lequel la ou les caractéristiques visuelles intrinsèques à la surface du bloc (1) carboné comprennent une forme géométrique singulière à la surface du bloc (1).

10. Procédé selon l'une quelconque des revendications précédentes, dans lequel les dispositifs de prise de vue comprennent un lecteur (11) optique et un dispositif d'enregistrement d'au moins une image brute (50, 51, 52, 53, 54) produite par ledit lecteur (11) optique.

11. Procédé selon la revendication 10, le système de traçabilité comprenant un dispositif de traitement numérique de l'au moins une image brute qui permet de générer une image optimisée (60, 61, 62, 63, 64) dans laquelle est mise en exergue la au moins une caractéristique visuelle intrinsèque de la surface (1a) extérieure du bloc (1) carboné.

12. Procédé selon l'une quelconque des revendications précédentes, dans lequel la station (40) d'identification initiale est confondue avec la station (41, 42, 43, 44) d'identification de suivi.

13. Procédé selon l'une quelconque des revendications précédentes, comprenant une pluralité de stations (41, 42, 43, 44) d'identification de suivi.

14. Procédé selon l'une quelconque des revendications précédentes, comprenant un dispositif de suivi de la position permettant de connaître et d'enregistrer la position du bloc (1) carboné entre deux stations d'identification (40, 41, 42, 43, 44).

15. Procédé selon la revendication 14, comprenant un dispositif d'horodatage des positions du bloc (1) carboné.

16. Procédé selon la revendication 14 ou la revendication 15, comprenant des moyens de convoyage et de manutention des blocs (1) carbonés pour leur assemblage en paquets (14) de blocs (1) carbonés en vue de leur traitement thermique dans un four (16) de cuisson et des moyens de désassemblage des paquets (14) après leur traitement thermique, le dispositif de suivi de la position étant apte à connaître la position de chaque bloc (1) carboné dans les paquets (14) et la position des paquets (14) dans le four (16).

17. Procédé selon l'une quelconque des revendications précédentes, particulièrement adapté pour un bloc carboné destiné à la production d'aluminium par électrolyse.

18. Procédé selon l'une quelconque des revendications précédentes, dans laquelle au moins une zone de traitement et/ou de stockage et/ou de transport comprend un four (16) de cuisson des blocs (1) carbonés, dans lequel la station (40) d'identification initiale est placée en amont du four (16) de cuisson de manière à définir la signature numérique sur un bloc (1) carboné cru, et dans lequel au moins une station (41, 42, 43, 44) d'identification de suivi est placée en aval du four de manière à reconnaître la signature numérique sur le bloc (1) carboné cuit.

## Patentansprüche

1. Rückverfolgbarkeitsverfahren von kohlenstoffhaltigen Blöcken (1) von der Herstellung der Blöcke bis zu ihrer Versiegelung auf Elektrolysestäben, das geeignet ist, die Blöcke vor und nach Wärmebehandlung zu überwachen, und das in einer Anlage (100) zur Herstellung von kohlenstoffhaltigen Blöcken durchgeführt wird, umfassend:
- ein Rückverfolgbarkeitssystem kohlenstoffhaltiger Blöcke (1) während ihrer Verarbeitung, ihres Transports und/oder ihrer Lagerung, mit:
- mindestens einer sogenannten Erstidentifizierungsstation (40) zur Identifizierung mindestens eines kohlenstoffhaltigen Blocks (1), wobei die Erstidentifizierungsstation eine Vorrichtung zur Erstellung einer sogenannten Erstaufnahme von mindestens einem Teil der Außenfläche (1a) des kohlenstoffhaltigen Blocks (1) umfasst;
- einem Signaturgenerator, der es ermöglicht, auf mindestens einer von der Erstaufnahmevorrichtung erstellten Aufnahme mindestens ein intrinsisches visuelles Merkmal zu erfassen, um auf der Grundlage dieses intrinsischen visuellen Merkmals mindestens eine digitale Signatur für den kohlenstoffhaltigen Block (1) zu erzeugen und aufzuzeichnen;
- mindestens einer sogenannten Verfolgungsidentifizierungsstation (41, 42, 43, 44) für den kohlenstoffhaltigen Block (1), wobei die Verfolgungsidentifizierungsstation (41, 42, 43, 44) eine sogenannte Verfolgungsaufnahmevorrichtung zur Aufnahme mindestens eines Teils der Außenfläche (1a) des kohlenstoffhaltigen Blocks (1) umfasst;
- mindestens einem Detektor, der es ermöglicht, auf mindestens einer von der Verfolgungsaufnahmevorrichtung erstellten Aufnahme zumindest teilweise das intrinsische visuelle Merkmal zu erfassen und die digitale Signatur des kohlenstoffhaltigen Blocks (1) zu erkennen, um den kohlenstoffhaltigen Block (1) zu identifizieren;
- und, zwischen zwei Identifizierungsstationen (40, 41, 42, 43, 44) des Rückverfolgbarkeitssystems, mindestens eine Zone zur Verarbeitung und/oder Lagerung und/oder zum Transport der kohlenstoffhaltigen Blöcke (1),
und wobei das System keine speziell für die Erzeugung einer digitalen Signatur des kohlenstoffhaltigen Blocks (1) vorgesehene Markierungsvorrichtung aufweist,
wobei das Verfahren umfasst:
- mindestens eine Erstaufnahme mindestens eines Teils der Außenfläche (1a) mindestens eines kohlenstoffhaltigen Blocks (1) durch die Erstidentifizierungsstation;
- Erfassen mindestens eines intrinsischen visuellen Merkmals auf der Erstaufnahme;
- Erzeugen und Aufzeichnen mindestens einer digitalen Signatur für den kohlenstoffhaltigen Block (1) auf der Grundlage des intrinsischen visuellen Merkmals;
- Erkennen der digitalen Signatur in mindestens einer Verfolgungsidentifizierungsstation (41, 42, 43, 44).

2. Rückverfolgbarkeitsverfahren nach Anspruch 1, umfassend:
- Transport des kohlenstoffhaltigen Blocks (1) zu einer Verfolgungsidentifizieru ngsstation;
- mindestens eine Verfolgungsaufnahme von mindestens einem Teil der Außenfläche des kohlenstoffhaltigen Blocks (1) durch eine Verfolgungsidentifizierungsstation (41, 42, 43, 44);
- Erfassung des mindestens einen intrinsischen visuellen Merkmals auf der Verfolgungsaufnahme,
- Erkennung der digitalen Signatur des kohlenstoffhaltigen Blocks (1).

3. Rückverfolgbarkeitsverfahren nach Anspruch 1 oder Anspruch 2, wobei der Erkennungsschritt einen Vergleich zwischen dem intrinsischen visuellen Merkmal der Erstaufnahme und dem intrinsischen visuellen Merkmal der Verfolgungsaufnahme und eine Bestimmung eines Ähnlichkeitsgrades zwischen dem intrinsischen visuellen Merkmal der beiden Aufnahmen umfasst.

4. Verfahren nach Anspruch 2 oder Anspruch 3, umfassend:
- die Aufzeichnung der Position des kohlenstoffhaltigen Blocks (1) in mindestens einer Verarbeitungs- und/oder Lagerungs- und/oder Transportzone,
- die Erkennung der digitalen Signatur umfasst dann eine Verknüpfung des intrinsischen visuellen Merkmals der Erstaufnahme mit dem intrinsischen visuellen Merkmal der Verfolgungsaufnahme durch Kenntnis der Position des kohlenstoffhaltigen Blocks (1) in der mindestens einen Verarbeitungs- und/oder Lagerungs- und/oder Transportzone.

5. Verfahren nach einem der vorhergehenden Ansprüche, wobei das/die intrinsische(n) visuelle(n) Merkmal(e) auf der Oberfläche des kohlenstoffhaltigen Blocks (1) eine bestimmte geometrische Form umfasst/umfassen, die in die Textur des kohlenstoffhaltigen Blocks (1) eingeschrieben ist.

6. Verfahren nach Anspruch 5, wobei das/die intrinsische(n) visuelle(n) Merkmal(e) auf der Oberfläche des kohlenstoffhaltigen Blocks (1) die Lage und/oder intrinsische Morphologie von Körnern (9a) umfasst/umfassen.

7. Verfahren nach Anspruch 5 oder Anspruch 6, wobei das/die intrinsische(n) visuelle(n) Merkmal(e) auf der Oberfläche des kohlenstoffhaltigen Blocks (1) einen oder mehrere Reliefdefekte in einer die Körner (9a) umgebenden Bindermatrix (9b) umfasst/umfassen.

8. Verfahren nach einem der vorhergehenden Ansprüche, wobei das (die) intrinsische(n) visuelle(n) Merkmal(e) auf der Oberfläche des kohlenstoffhaltigen Blocks zumindest teilweise Abdrücke (3) von Stopfen umfasst/umfassen, die während der Formgebung des kohlenstoffhaltigen Blocks (1) zur Bildung von Hohlräumen (2) verwendet wurden, die zur Aufnahme von Elektrolysestäben (22) bestimmt sind.

9. Verfahren nach einem der vorhergehenden Ansprüche, wobei das/die intrinsische(n) visuelle(n) Merkmal(e) auf der Oberfläche des kohlenstoffhaltigen Blocks (1) eine einzigartige geometrische Form auf der Oberfläche des Blocks (1) umfasst/umfassen.

10. Verfahren nach einem der vorhergehenden Ansprüche, wobei die Aufnahmevorrichtungen ein optisches Lesegerät (11) und eine Vorrichtung zur Aufzeichnung mindestens eines von dem optischen Lesegerät (11) erzeugten Rohbildes (50, 51, 52, 53, 54) umfassen.

11. Verfahren nach Anspruch 10, wobei das Rückverfolgbarkeitssystem eine Vorrichtung zur digitalen Verarbeitung des mindestens einen Rohbildes umfasst, um ein optimiertes Bild (60, 61, 62, 63, 64) zu erzeugen, in dem das mindestens eine intrinsische visuelle Merkmal der Außenfläche (1a) des kohlenstoffhaltigen Blocks (1) hervorgehoben ist.

12. Verfahren nach einem der vorhergehenden Ansprüche, wobei die Erstidentifizierungsstation (40) mit der Verfolgungsidentifizierungsstation (41, 42, 43, 44) zusammenfällt.

13. Verfahren nach einem der vorhergehenden Ansprüche, umfassend eine Mehrzahl von Verfolgungsidentifizierungsstationen (41, 42, 43, 44).

14. Verfahren nach einem der vorhergehenden Ansprüche, umfassend eine Positionsverfolgungsvorrichtung, die es ermöglicht, die Position des kohlenstoffhaltigen Blocks (1) zwischen zwei Identifizierungsstationen (40, 41, 42, 43, 44) zu erkennen und aufzuzeichnen.

15. Verfahren nach Anspruch 14, umfassend eine Vorrichtung zur Zeitstempelung der Positionen des kohlenstoffhaltigen Blocks (1).

16. Verfahren nach Anspruch 14 oder Anspruch 15, umfassend Mittel zum Fördern und Handhaben der kohlenstoffhaltigen Blöcke (1) für ihre Zusammenstellung zu Paketen (14) von kohlenstoffhaltigen Blöcken (1) zum Zweck ihrer Wärmebehandlung in einem Brennofen (16) und Mittel zum Zerlegen der Pakete (14) nach ihrer Wärmebehandlung, wobei die Positionsverfolgungsvorrichtung in der Lage ist, die Position jedes kohlenstoffhaltigen Blocks (1) in den Paketen (14) und die Position der Pakete (14) in dem Ofen (16) zu kennen.

17. Verfahren nach einem der vorhergehenden Ansprüche, besonders angepasst an einen kohlenstoffhaltigen Block, der zur Herstellung von Aluminium durch Elektrolyse bestimmt ist.

18. Verfahren nach einem der vorhergehenden Ansprüche, wobei mindestens eine Verarbeitungs- und/oder Lagerungs- und/oder Transportzone einen Brennofen (16) für die kohlenstoffhaltigen Blöcke (1) umfasst, wobei die Erstidentifizierungsstation (40) stromaufwärts des Brennofens (16) angeordnet ist, um die digitale Signatur auf einem rohen kohlenstoffhaltigen Block (1) zu definieren, und wobei mindestens eine Verfolgungsidentifizierungsstation (41, 42, 43, 44) stromabwärts des Ofens angeordnet ist, um die digitale Signatur auf dem gebrannten kohlenstoffhaltigen Block (1) zu erkennen.

## Claims

1. A method for tracking carbonaceous blocks (1), from the manufacturing of said blocks until their sealing on electrolysis rods, suitable for the tracking of said blocks before and after a heat treatment realized in an installation (100) for manufacturing carbonaceous blocks comprising:
- a system for tracking carbonaceous blocks (1) during their processing, transport and/or storage, **characterized in that** it comprises:
- at least one station (40) for the so-called initial identification of at least one carbonaceous block (1), the initial identification station comprising a device for the so-called initial image capture of at least a part of the external surface (1a) of the carbonaceous block (1);
- a signature generator making it possible to detect, on at least one shot by the initial shooting device, at least one intrinsic visual characteristic, so as to generate and record at least one digital signature for the carbonaceous block (1) from said intrinsic visual characteristic;
- at least one station (41, 42, 43, 44) for identification known as tracking of the carbonaceous block (1), the station (41, 42, 43, 44) for tracking identification comprising a device for taking pictures known as tracking of at least a part of the external surface (1a) of the carbonaceous block (1);
- at least one detector making it possible to detect, on at least one shot by the tracking camera device, at least in part said intrinsic visual characteristic, and to recognize the digital signature of the carbonaceous block (1) to identify the carbonaceous block (1)
- and, between two stations (40, 41, 42, 43, 44) for identification of the system for tracking, at least one zone for processing and/or storing and/or transporting the carbonaceous blocks (1),
- and, wherein the system is devoid of a marking device specially dedicated to the generation of a digital signature of the carbonaceous block (1),
said method comprising:
- at least one initial image of at least a part of the external surface (1a) of at least one carbonaceous block (1) by the initial identification station;
- detection on the initial shot of at least one intrinsic visual characteristic,
- generation and recording of at least one digital signature for the carbonaceous block (1) from said intrinsic visual characteristic;
- recognition of the digital signature in at least one tracking identification station (41, 42, 43, 44).

2. Method according to claim 1, comprising:
- transport of the carbonaceous block (1) to a tracking identification station;
- at least one tracking shot of at least a part of the outer surface of the carbonaceous block (1) by a tracking identification station (41, 42, 43, 44);
- detection on the tracking shot of the at least one intrinsic visual characteristic,
- recognition of the digital signature of the carbonaceous block (1).

3. Method according to claim 1 or claim 2 wherein the recognition step comprises a comparison between the intrinsic visual characteristic of the initial shot and the intrinsic visual characteristic of the tracking shot and a determination of a similarity rate between the intrinsic visual characteristic of the two shots.

4. Method according to claim 2 or claim 3, comprising:
- recording the position of the carbonaceous block (1) in at least one processing and/or storage and/or transport area,
- the recognition of the digital signature then comprises relating the intrinsic visual characteristic of the initial shot to the intrinsic visual characteristic of the tracking shot by knowing the position of the carbonaceous block (1) in the at least one processing and/or storage and/or transport area.

5. Method according to one of the preceding claims, wherein the one or more visual characteristics intrinsic to the surface of the carbonaceous block (1) include a particular geometric shape inscribed in the texture of the carbonaceous block (1).

6. Method according to claim 5, wherein the one or more visual characteristics intrinsic to the surface of the carbonaceous block (1) include the location and/or intrinsic morphology of grains (9a).

7. Method according to claim 5 or claim 6, wherein the one or more visual characteristics intrinsic to the surface of the carbonaceous block (1) comprise one or more relief defects in a binding matrix (9b) surrounding grains (9a).

8. Method according to any of the preceding claims, wherein the one or more visual characteristics intrinsic to the surface of the carbonaceous block include at least in part stub hole impressions (3) used during the shaping of the carbonaceous block (1) to form cavities (2) for receiving electrolysis rods (22).

9. Method according to any of the preceding claims, wherein the one or more visual characteristics intrinsic to the surface of the carbonaceous block (1) include a singular geometric shape on the surface of the carbonaceous block (1).

10. Method according to any of the preceding claims, wherein the imaging devices comprise an optical reader (11) and a device for recording at least one raw image (50, 51, 52, 53, 54) produced by said optical reader (11).

11. Method according to claim 10, wherein the tracking system comprises a device for digitally processing the at least one raw image to generate an optimized image (60, 61, 62, 63, 64) in which the at least one intrinsic visual characteristic of the outer surface (1a) of the carbonaceous block (1) is highlighted.

12. Method according to any of the preceding claims, wherein the initial identification station (40) is the same with the tracking identification station (41, 42, 43, 44).

13. Method according to any of the preceding claims, comprising a plurality of tracking identification stations (41, 42, 43, 44).

14. Method according to any of the preceding claims, comprising a position tracking device for knowing and recording the position of the carbonaceous block (1) between two identification stations (40, 41, 42, 43, 44).

15. Method according to claim 14, comprising a time stamping device for the positions of the carbonaceous block (1) .

16. Method according to claim 14 or claim 15, comprising means for conveying and handling the carbonaceous blocks (1) for assembling them into packages (14) of carbonaceous blocks (1) for heat treatment in a baking furnace (16) and means for disassembling the packages (14) after their heat treatment, the position monitoring device being capable of knowing the position of each carbonaceous block (1) in the packages (14) and the position of the packages (14) in the furnace (16).

17. Method according to any of the preceding claims, particularly suitable for a carbonaceous block intended for the production of aluminium by electrolysis.

18. Method according to any of the preceding claims, in which at least one treatment and/or storage and/or transport area comprises a furnace (16) for firing the carbonaceous blocks (1), wherein the initial identification station (40) is placed upstream of the baking furnace (16) so as to define the digital signature on a raw carbonaceous block (1), and wherein at least one tracking identification station (41, 42, 43, 44) is placed downstream of the furnace so as to recognize the digital signature on the baked carbonaceous block (1).
